# EUROPEAN PATENT APPLICATION

(11) **EP 3 190 021 A1**
(43) Date of publication of application: **12.07.2017**
(21) Application number: 16150537.5
(22) Date of filing: 08.01.2016
(51) Int. Cl.: B60W 30/095, B60Q 1/52, B60Q 9/00, B60W 50/14

(54) **SYSTEM AND METHOD FOR COLLISION WARNING**

(71) Applicant: Harman Becker Automotive Systems GmbH, 76307 Karlsbad (DE)
(72) Inventor: Lee, Kuo-Sek, 80333 Munich (DE)
(74) Representative: Westphal, Mussgnug & Partner Patentanwälte mbB

(57) **Abstract**

A method for collision warning is provided comprising determining (801) the presence of a second vehicle (202), driving behind a first vehicle (201) in the same direction. A danger value is determined (802), which is indicative of a potential collision of the first and the second vehicle (201, 202). A warning signal (332) is generated (803), which is displayed in a side or rear-view mirror (331, 431, 534) of the first vehicle (201), if the danger value crosses a predetermined threshold.

## Description

### TECHNICAL FIELD

The disclosure relates to a system and a method for collision warning, in particular for rear-side collision warning and prevention in vehicles.

### BACKGROUND

For vehicle drivers it is often difficult to see another vehicle approaching from the rear and to estimate its speed, especially if the approaching vehicle is driving at high speed. The estimation of speeds for vehicles approaching from the rear may be hindered by C-pillar width, height, and location together with the shape of rear side windows. In some vehicles, high seatbacks may obstruct the vision to the rear either through the rear side window or by the rear-view mirror. But even if the driver sees another vehicle clearly in the mirrors, it is often difficult to estimate its speed correctly. This may result in a great number of accidents.

### SUMMARY

The method described herein includes the following procedures: determining the presence of a second vehicle, driving behind a first vehicle in the same direction; determining a danger value which is indicative of a potential collision of the first and the second vehicle; and generating a warning signal which is displayed in a side or rear-view mirror of the first vehicle, if the danger value crosses a predetermined threshold.

A collision warning system comprises: a detection unit, which is configured to determine the presence of a second vehicle, driving behind a first vehicle in the same direction; a controller, which is configured to determine a danger value which is indicative of a potential collision of the first and the second vehicle; and a signal unit, which is configured to generate a warning signal which is displayed in a side or rear-view mirror of the first vehicle, if the danger value crosses a predetermined threshold.

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The method may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 is a block diagram of an exemplary collision warning system.
Figure 2 is a schematic diagram of a common traffic situation.
Figure 3 is a schematic diagram of an exemplary warning signal in a rear-view mirror.
Figure 4 is a schematic diagram of a further warning signal.
Figure 5 is a schematic diagram of an exemplary warning signal in a side mirror.
Figure 6 is a schematic diagram, illustrating a driver's line of vision.
Figure 7 is a further schematic diagram, illustrating a driver's line of vision.
Figure 8 is a flowchart of an exemplary method for collision warning.

### DETAILED DESCRIPTION

For the driver of a vehicle it is often difficult to estimate the speed of other vehicles. Especially when approaching from the rear, the speed of other vehicles is often underestimated. When seen through the rear-view or side mirrors, other vehicles often appear to be slower than they actually are. Especially at night or under bad weather conditions when sight is limited, a correct speed estimation may be difficult.

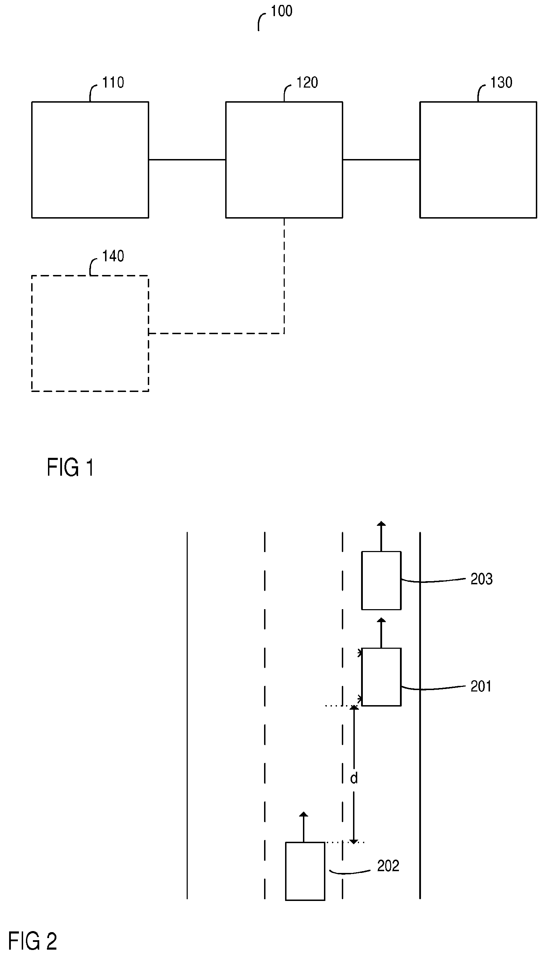

Referring to Figure 1, a collision warning system 100 includes a detection unit 110. The detection unit 110 may be mounted on a first vehicle and is configured to detect the presence of other vehicles driving behind the first vehicle. The detection unit 110 may be mounted on the rear or on the side of a vehicle, for example. It may be mounted at any position on the vehicle, from where it is able to detect at least one of the presence, the direction of movement and the speed of another vehicle, for example. The vehicles may be cars, trucks, motorcycles or any other kind of vehicles. The presence of another vehicle may be determined using object recognition and direction of movement detection techniques. Methods are known with which objects, such as vehicles, may be identified in an image or a video sequence. The detection unit 110, therefore, may include one or more cameras, for example. Other object recognition methods include laser based, ultrasound based or radar based methods. To estimate the direction of movement of a vehicle, vector algorithms may be used, for example. Other vehicles may drive at a constant distance behind the first vehicle, may approach the first vehicle from the rear or may recede from the first vehicle. Another vehicle may drive behind the first vehicle on the same lane. It is, however, also possible to detect other vehicles, which are driving on another lane of a multi-lane road, if the detection range of the detection unit 110 not only includes the area behind the first vehicle, but also lateral areas.

The detection unit 110 may further be configured to estimate the speed of a detected vehicle. Approaching vehicles and their speed may be detected by means of an appropriate sensor. Such sensor may, for example, be laser based. One example of a laser based sensor is the so-called laser surface velocimeter (LSV). An LSV is a non-contact optical speed sensor, which is configured to measure the speed of moving surfaces. LSVs use the laser Doppler principle to evaluate the laser light scattered back from a moving surface. The Doppler effect (or Doppler shift) is the change in frequency of a wave for an observer moving relative to the source of the wave. LSVs are widely known and, therefore, will not be explained in further detail.

A laser based sensor, however, is also only an example. Other sensors may be used as well. For example, the speed of an approaching vehicle may be determined using a radar based sensor, like a Doppler radar. A Doppler radar is a specialized radar that uses the Doppler effect to produce velocity data about objects at a distance. A microwave signal is bounced off a desired target and it will then be analyzed how the object's motion has altered the frequency of the returned signal. This variation gives direct and highly accurate measurements of the radial component of a target's velocity relative to the radar. The sensors described above, however, are only examples. Any other suitable object recognition and speed sensors may be used as well.

The detection unit 110 may further be configured to estimate the distance between the first vehicle and a second vehicle. The distance between the vehicles may also be detected by means of laser, radar or ultrasound sensors, for example.

The detection unit 110 may be mounted to the rear of the first vehicle. For example, it may be mounted to the center high mount stop light (CHMSL). This is, however, only an example. The detection unit 110 may be mounted on the first vehicle at any suitable position from where it is able to scan the area behind the first vehicle.

Vehicles may be detected when the distance between the vehicles is less than a predetermined distance. The distance from which a vehicle may be detected, among other things, depends on the kind of sensor that is used. For example, vehicles may be detected when the distance to the first vehicle is less than 250m, if a laser sensor is used.

Information about a detected vehicle and/or the speed of a detected vehicle may be periodically sent to a controller 120, which is coupled to the detection unit 110. The controller 120 may further process the data and determine a danger value. The danger value may be dependent on a changing distance between the first vehicle and the second vehicle. The controller 120 may, however, consider further parameters, such as the speed of the first and/or the second vehicle, the presence of further vehicles, road conditions, a steering angle of the first vehicle, a gear position, a turn indication (indicators activated/not activated) and/or a route that has been entered in the first vehicles navigation system. Any other parameters may be considered as well. If the danger value determined by the controller 120 crosses a predefined threshold, a warning signal will be generated. The danger value may be determined by any suitable algorithm. In the simplest case, for example, the danger value only has two conditions, a logical "1" (high state) and a logical "0" (low state). The danger value may be 0, if no vehicle is detected, and may be 1 if a vehicle is detected. If the threshold is chosen between 0 and 1, a warning signal will be generated as soon as another vehicle is detected.

Other examples are illustrated in the following. The driver, for example, may be informed about a second vehicle, if the distance between the first and the second vehicle is less than a predetermined distance. It may further be taken into consideration, whether the second vehicle is considerably faster than the first vehicle and is therefore approaching the first vehicle. If the second vehicle is slower than the first vehicle and is receding, it might not be necessary to inform the driver, for example. Further, it might not be necessary to generate a warning signal, if the driver of the first vehicle does not make any preparations for overtaking any other vehicles.

Referring to Figure 2, a first vehicle 201 is driving on the very right lane of a three-lane road. The vehicles in this example are left-hand driven vehicles and an overtaking maneuver generally takes place on the left side. A second vehicle 202 approaches on the middle lane from the rear. A third vehicle 203 is driving in front of the first vehicle 201 on the very right lane. The second vehicle 202 may be detected, once it falls below a certain distance d from the first vehicle 201. When the second vehicle 202 is detected, the driver of the first vehicle 201 may be informed about the approaching vehicle. However, it may not be necessary to inform the driver at any rate. For example, the driver of the first vehicle 201 may only be informed, when he wishes to overtake the third vehicle 203. This may be detected, when the driver activates the indicator to initiate a passing maneuver. It is, for example, also possible to detect a passing maneuver when it is detected that the vehicle moves to a different lane. Lane departure warning systems today are able to detect a change of lanes, for example. The driver, therefore, may only be informed about the second vehicle 202, when the distance d between the vehicles is shorter than a predetermined distance and the indicator is activated. This is, however, only an example. Any other parameters may be taken into consideration for a decision, whether a warning signal should be generated or not. The above has been described for right-hand traffic. The same, however, applies for left-hand traffic, where the overtaking maneuver takes place on the right side.

Again referring to Figure 1, the collision warning system 100 further includes a signal unit 130. The signal unit 130 may be configured to generate the warning signal. The warning signal may be an acoustical or a visual warning signal. An acoustical signal could be a single tone, a tone sequence or an announcement, for example. As a visual warning signal, a caution light may be turned on or may begin to flash. It is also possible to display any kind of warning signal on a display, e.g. the display of a built-in navigation system.

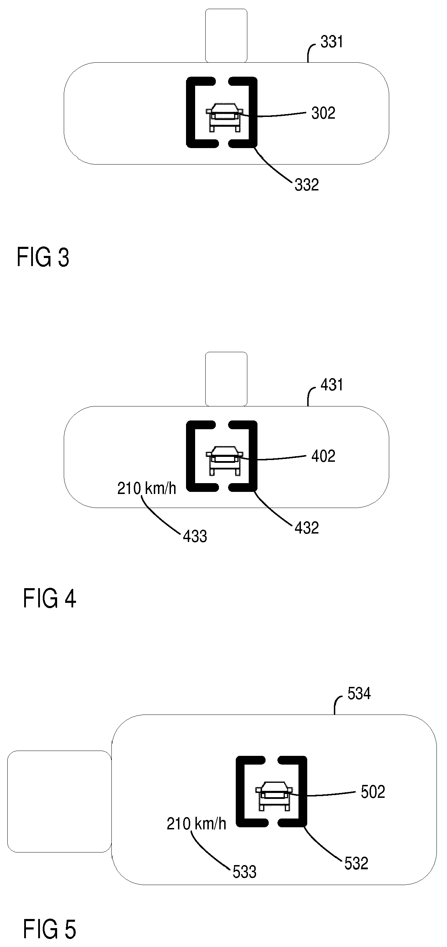

Referring to Figure 3, the warning signal 332 is displayed in the rear-view mirror 331 of the first vehicle. When the second vehicle 302 appears in the rear-view mirror 331, an edging may be faded-in, which surrounds the reflection of the second vehicle 302. The edging may have a square, rectangular or round shape, for example. Any other shapes, however, are also possible. Alternatively, it is further possible to just underline the reflection of the second vehicle 302 or highlight the reflection in any other way.

A warning signal may be generated each time a vehicle is detected and shows a reflection in at least one of the side or rear-view mirrors. This may, however, be disturbing for the driver of the first vehicle and/or the driver might get used to the warning signal. If, for example, a warning signal 332 is not generated each time a vehicle's reflection appears in the rear-view mirror 331, but only when a collision is likely to happen, the driver will not get used to the warning signal and will be encouraged to evaluate the situation more carefully.

Optionally or additionally to just highlighting another vehicle 402 in the rear-view mirror 431, the signal unit 130 may be configured to display a textual (or text-based) warning in the mirror 431. The text-based warning may be, as non-limiting examples, "caution", "stop" or "brake". The textual warning may also include the determined speed 433 of the other vehicle 402. This is schematically illustrated in Figure 4. In this case, the driver of the first car does not need to estimate the speed of the second vehicle 402 anymore, but is provided with a substantially precise value. This makes it easier for the driver to evaluate a situation and, for example, make a decision whether to overtake a third vehicle in front or wait until the second car 402 has passed.

Referring to Figure 5, the warning signal 532 and/or speed indication 533 (or other writing) may additionally or optionally be displayed in one or both of the side mirrors 534. Some drivers only take a look in the rear-view mirror 331, 431 or only in the side mirrors 534. If a warning signal 332, 432, 532 and/or speed indication 433, 533 is displayed in both the rear-view mirror 331, 431 and the side mirrors 534, the chances are higher that the driver notices the warning signal.

Additionally or optionally to generating a warning signal, the signal unit 130 may be configured to support the driver when conducting any maneuvers, in order to avoid collisions. In order to determine the danger value, relevant parameters may be taken into consideration. If the danger value and, therefore, the probability for a collision crosses a certain threshold, the signal unit 130 may assist the driver in his driving process. If, for example, a second car is approaching the first car from the rear at a high speed and the driver of the first car, which is travelling at a significantly lower speed, initiates a passing maneuver, the signal unit 130 may intervene. For example, the signal unit 130 may make sure that the first vehicle stays on the current lane and may not overtake another vehicle, as long as the second vehicle is rated as a potential danger. The signal unit 130, therefore, may implement features of a lane keeping assistant or may be coupled to an available lane keeping assistant, for example.

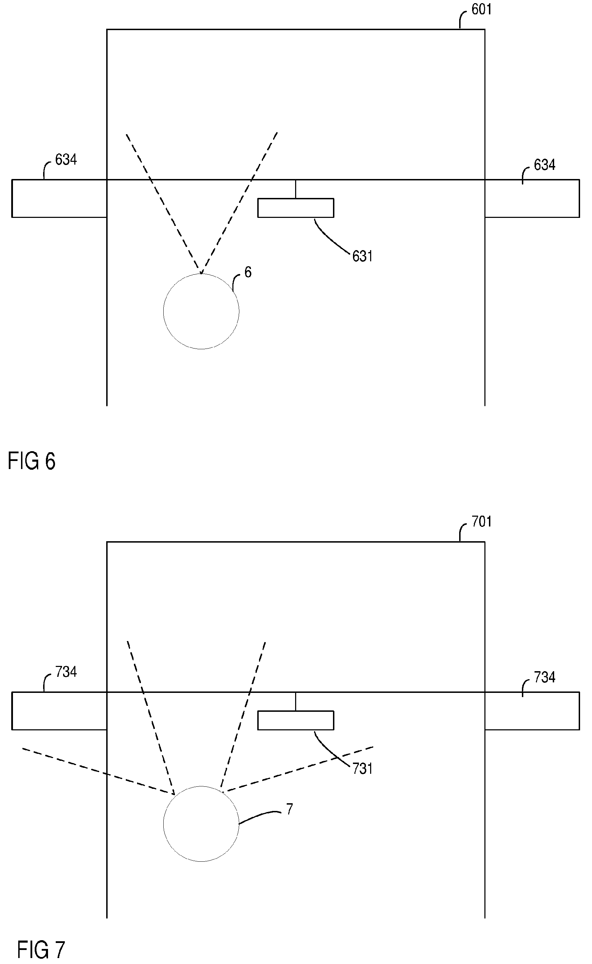

Further referring to Figure 1, the collision warning system 100 may optionally further include a monitoring unit 140. The monitoring unit 140 is configured to monitor the line of vision of the driver 6 of the first vehicle 601. In some cases, it may be disturbing for the driver 6, when suddenly a warning signal is generated in the mirrors, which the driver 6 only recognizes from the corner of the eye when looking on the street ahead of the vehicle 601. This situation is exemplary illustrated in Figure 6, by means of a top view of the first vehicle 601. The driver is looking straight ahead and has his sight directed on the road and other vehicles travelling in front of the first vehicle 601. In such a case the driver 6 may be disturbed, if a warning signal is generated in one of the mirrors 631, 634, as he will only see the warning signal from the corner of his eyes.

The monitoring unit 140 is configured to detect, whether the driver 7 is looking in the direction of one of the side or rear-view mirrors 731, 734, as is illustrated in Figure 7. The monitoring unit 140 may, therefore, include a camera or any other suitable device which may detect the line of vision of the driver 7. If the monitoring unit 140 detects that the driver 7 is looking in the direction of one of the mirrors 731, 734, the warning signal may be displayed in the mirror. Otherwise, if the driver 7 is not looking in the direction of one of the mirrors 731, 734, no warning signal will be displayed in the mirror to avoid any unnecessary disturbances of the driver 7.

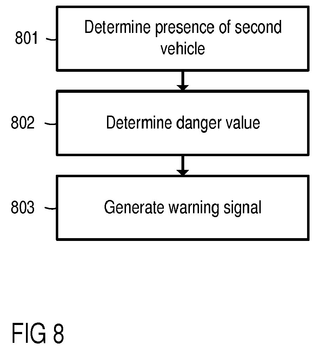

Referring to Figure 8, a method for collision warning is illustrated. In a first step, the presence of a second vehicle, which is driving behind the first vehicle, is determined (step 801). Furthermore, a danger value is determined (step 802). The danger value is indicative of a potential collision of the first and the second vehicle. The danger value is then compared to a predetermined threshold (step 803). If the danger value crosses the predetermined threshold, a warning signal is generated. The warning signal is displayed in a side or rear-view mirror of the first vehicle (step 804) to inform the driver of the first vehicle about the presence of the second vehicle and/or to warn him about a potential collision.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for collision warning, the method comprising:
determining the presence of a second vehicle, driving behind a first vehicle in the same direction;
determining a danger value which is indicative of a potential collision of the first and the second vehicle; and
generating a warning signal which is displayed in a side or rear-view mirror of the first vehicle, if the danger value crosses a predetermined threshold.

2. The method of claim 1, wherein the warning signal includes an edge, which surrounds a reflection of the second vehicle in a side or rear-view mirror.

3. The method of claim 2, wherein the edging has a square, a rectangular or a round shape.

4. The method of claim 1, wherein the warning signal is a textual warning.

5. The method of claim 4, wherein the textual warning includes a warning and/or an indication of the speed of the second vehicle.

6. The method of any of the preceding claims, further comprising
determining, whether the driver of the first vehicle is looking in the direction of a side mirror or a rear-view mirror.

7. The method of claim 6, wherein a warning signal is only generated when it is determined that the driver is looking in the direction of a side mirror or a rear-view mirror.

8. The method of any of the preceding claims, wherein the danger value is dependent on at least one of
the speed of the first vehicle;
the speed of the second vehicle;
the distance between the first and the second vehicle;
a steering angle of the first vehicle;
a gear position of the first vehicle; and
a route that has been entered in a navigation system of the first vehicle.

9. The method of any of the preceding claims, further comprising
determining, whether the driver of the first vehicle is initiating a passing maneuver of a third vehicle.

10. The method of claim 9, wherein a warning signal is only generated, when it is determined that the driver of the first vehicle is initiating a passing maneuver.

11. A computer program configured to execute the method of any of claims 1 to 10.

12. A collision warning system comprising
a detection unit, which is configured to determine the presence of a second vehicle, driving behind a first vehicle in the same direction;
a controller, which is configured to determine a danger value which is indicative of a potential collision of the first and the second vehicle; and
a signal unit, which is configured to generate a warning signal which is displayed in a side or rear-view mirror of the first vehicle, if the danger value crosses a predetermined threshold.

13. The collision warning system of claim 11, further comprising
a monitoring unit, which is configured to determine whether the driver of the first vehicle is looking in the direction of a rear-view mirror or a side mirror.

14. The collision warning system of claim 12, wherein the signal unit is configured to generate a warning signal only when the monitoring unit detects that the driver of the first vehicle is looking in the direction of a rear-view mirror or a side mirror.

15. The collision warning system of any of claims 11 to 13, wherein the detection unit includes at least one of
a camera;
a laser sensor;
a radar sensor; and
an ultrasound sensor.
